# EUROPEAN PATENT SPECIFICATION

(11) **EP 3 042 165 B1**
(45) Date of publication and mention of the grant of the patent: **15.01.2020**
(21) Application number: 14761938.1
(22) Date of filing: 29.08.2014
(51) Int. Cl.: G01G 21/28, G01G 23/18

(54) **WEIGHING SCALE SYSTEM WITH INTERFACE COMPONENT**
WAAGESYSTEM MIT SCHNITTSTELLENKOMPONENTE
SYSTÈME D'ÉCHELLE DE PESÉE À COMPOSANT D'INTERFACE

(30) Priority: 04.09.2013 GB 201315699
(43) Date of publication of application: 13.07.2016
(73) Proprietor: Illinois Tool Works Inc., Glenview, IL 60025 (US)
(72) Inventor: CARTWRIGHT, Kevin, Smethwick West Midlands B66 2LP (GB); TAYLOR, Ian, Smethwick West Midlands B66 2LP (GB); LOWE, Rob, Smethwick West Midlands B66 2LP (GB); JACKSON, Neil, Smethwick West Midlands B66 2LP (GB)
(74) Representative: HGF Limited
(86) International application number: PCT/US2014/053397
(87) International publication number: WO 2015/034772

(56) References cited:
- EP-A1- 2 361 551
- US-A1- 2001 034 671
- US-B2- 7 376 934
- US-B2- 7 550 682

## Description

### Background

Weighing scales are utilised in commercial contexts globally, as e.g. described in US 7 376 934; wherever goods are sold by weight, an accurate weighing scale is an indispensable necessity of doing business. Historically, weighing scales have incorporated simple mechanical means of displaying information - for instance, through the movement of a needle which acts as an indicator of the measurement obtained. Modern scales, however, typically provide information through a powered display in communication with circuitry comprised in the scale. In addition, modern scales often incorporate controls for the input of data such as product type, commands for calibration, changing between display modes and so on. Displays, controls, and components capable of acting as both such as touchscreens comprise interface components permitting a human user to receive useful information from a scale, and to allow a human operator to provide information and commands to a scale. The provision of specialised interface components allows scales to serve functions which go well beyond mere measurement of weight. "Self-service" checkouts in supermarkets, for instance, are essentially weighing scales with a display programmed to provide simple and easy to understand instructions, simplified controls, and a means for mechanically accepting money.

Whilst the requirement of accurate, reliable measurement of weight is absolutely necessary, there is some degree of freedom available in the design of weighing scales, and indeed different markets have different conventions when it comes to the physical appearance of weighing scales. Some scales have a compact appearance where the display, controls, or other interface components of the scale are incorporated into a base unit which also comprises the weighing pan and load cell (or other weighing mechanism); these are often used where shop counters are high, since in such cases the display may be at eye level (or close enough to eye level to allow for quick and easy reading of the display). In other contexts - for instance, where shop counters are conventionally lower - the display and optionally other interface components may be affixed to an elevated "tower" position, typically affixed to the base unit comprising the weighing pan and load cell (or other weighing mechanism), so that the base unit sits on the counter but the display is elevated to eye level (or thereabouts).

Typically, the choice of whether to use an "all-in-base" configuration or to provide at least one interface component on a tower is purely a matter of personal choice on the part of the end user of the scale. Much depends on what the scale is to be used for and where it is going to be used (for instance, whether it is to be used in a shop, or a warehouse, or a kitchen, or a home, what is to be weighed on it, and so on). Whilst a manufacturer of weighing scales may, through market research and their own statistics and knowhow, have a reasonable idea of how many scales they can expect to sell in a month, it is substantially more difficult to predict how many scales will be required in an all-in-base configuration and how many will required having at least one interface component on a tower.

Where a scale is sold with essentially the same base unit and multiple possible configurations, the traditional solution to this problem has been overstocking. An excess of stock of each model is produced at the factory producing the scales and shipped through the producer's distribution network. (Typically the products will pass through a configuration site where the weighing scale is calibrated and quality assurance processes take place, and then on to local distributors, though it is possible that a factory site may also comprise a configuration site.) This is expensive and inefficient since more units need to be manufactured than are strictly necessary, those units need to be transported (with all the associated shipping costs paid), each unit needs to be configured, and the excess units need to be stored whilst they are sold off.

Many weighing scales have base units comprising circuitry (which may be in the form of a motherboard) to which interface components such as the display or controls are wired. It is possible in some of these cases to open the base unit of a weighing scale, decouple an interface component, and reattach the interface component at another point on the motherboard to allow the interface component to be moved from one location to another, such as from the base unit to a tower or vice versa, or indeed to be replaced outright. This is a skilled operation which requires the proper training and tools, so it can be uneconomical. In addition, any work which entails modifications to the motherboard raises questions of quality control; configuration and calibration may need to be repeated afterwards, and an error or accident in the process could easily ruin the motherboard, rendering the scale useless. There is also the question of where this adaptation is going to take place: if it takes place at a single configuration site, then individual distributors will still need to overstock, whereas if it takes place at the distributors' sites that will entail setting up a configuration site at every distribution site, which could be very uneconomical.

An additional problem is in breakages and servicing. If damage occurs to an interface component the weighing scale may be rendered useless for its intended function. (For instance, damage to controls may make it impossible to control the scale, or damage to the display may mean that the weight measured is not displayed.) In some weighing scale designs this damage means the entire weighing scale must be replaced. In other designs it may be possible for a service engineer to replace components of the weighing scale, but this necessitates arranging for the engineer to visit (or for the weighing scale to be shipped to a service site) and will again typically entail opening the base unit to disconnect damaged components from the weighing scale's circuitry. Not only will the service engineer's time have to be paid for, but there is also the matter of the skills and equipment used in repair.

Breakages are a particular issue in weighing scales in tower configurations, since not only are these awkward to transport due to the tower extending from the base unit but it is also extremely easy to damage the tower in transport. Damage to the tower will typically damage connectivity between the base unit and any component such as the display or controls located on the tower, even if they were not directly damaged in an accident themselves.

There is therefore a long-felt need for a weighing scale which can be provided in multiple different configurations, but in which changing the scale from one configuration to another or replacing broken interface components does not entail a complex process requiring training, tools, or reconfiguration/calibration once the work is complete, does not disturb the calibration of the load cell, and does not require the breaking of any seals to access connection points which would result in the unit being no longer compliant with legal standards until the calibration can be checked and the seals replaced by an official assessor.

### Summary of the Invention

At its simplest, the invention entails a weighing scale system comprising a base unit comprising circuitry and at least one modular interface component wherein the scale further comprises at least two external attachment point adapted to securely and detachably receive the modular interface component and at least one electrical connection point adapted to allow communication between the modular interface component and the circuitry. The scale may additionally comprise a tower which comprises at least one external attachment point.

It should be understood that the modular interface component can be any component which permits a user of the scale to provide instructions or information to the scale, or which allows the scale to provide information to a user of the scale, or both. As a set of non-limiting examples, the modular interface component may comprise one or more of the following features: a set of controls, or a display, or a touchscreen (capable of acting as both a display and a means of controlling the scale), or a printer (especially of the sort adapted to print receipts from a roll of paper), or an optical code reader (such as a barcode scanner, or a camera capable of interpreting a QR code, for example).

In some cases the external attachment points on the scale may be generic, so any one of a series of different modular interface components may be attached to them. (This may be useful, for instance, in providing a scale which can be rapidly and easily transformed from a self-service checkout to a traditional cashier-controlled checkout and back again.) Alternatively, at least one of the external attachment points may be adapted to receive a specific modular interface component. For instance, one or more particular external attachment points could be designated display attachment points, and the modular interface components could be designed such that only those which are displays can fit into the display attachment points.

In many cases, external attachment points can be comprised on base unit (and/or the tower, where it is present), but these are not the only locations where external attachment points may be located in the present invention. For example, in some cases a modular interface component may be designed such that when it is received on an external attachment point on the tower it provides an external attachment point for another modular interface component. This saves space on the tower and allows for two modular interface components to be located on the tower in close proximity to each other.

In the case of scales which may comprise a tower the base unit may preferably comprise a tower attachment point configured to securely and detachably receive the tower. This permits the tower to be removed from the base unit when neither the display nor the controls are received at external attachment points on the tower. Preferably, the tower external attachment point is also an external attachment point for a modular interface component.

Preferably, the base unit comprises a tower storage port configured to store the tower. This provides a convenient place to put the tower when it is not otherwise required. Preferably, the tower storage port is located behind an external attachment point, such that when a modular interface component is attached at the external attachment point the tower storage port is inaccessible. This prevents the tower falling out or otherwise being accessed when it is stored in the tower storage port and a modular interface component is attached at the external attachment point.

The at least one electrical connection point is a point where electrical communication can be established between the modular interface component and the circuitry comprised within the base unit. The at least one electrical connection point can be provided in a number of ways. For instance, at least one external attachment point may comprise an electrical connection point consisting essentially of electrical contacts adapted to interface with electrical contacts provided on a modular interface component. In fact, in this manner each external connection point could have its own associated electrical connection point.

Alternatively, at least one electrical connection point could be provided at a point on the base unit removed from the external attachment point; in such a case communication between a modular interface component and circuitry can be established by a wire extending between the electrical connection point and the modular interface component. In this way electrical connection of a modular interface component can be maintained at the same point on the base unit (and therefore the same point on the motherboard within the base unit) regardless of which external attachment point the modular interface component is attached to. In such cases, the wire may comprise a plug or connector which can be reversibly removed from the electrical connection point (preferably, such wires can be reversibly retracted into the modular interface component), or a plug or connector which can be reversibly removed from the modular interface component (preferably, such wires can be reversibly retracted into the electrical connection point or base unit). Where a wire does extend from a modular interface component to an electrical connection point removed from the external attachment point, the base unit may comprise a course for the taking up of slack in the wire, and/or the tower can comprise a cavity adapted to guide a wire extending from a modular interface component received on an external attachment point on the tower to the electrical connection point.

To provide additional security, one or more of the external attachment points may comprise a fixing to prevent detachment of a modular interface component or tower received in the external attachment point. Examples of suitable fixings include, but are not limited to, screws, locks, bolts and sliders. Notably, the fixings can be undone to allow detachment without opening the base unit casing.

Additional configurations may be enabled simply by providing external attachment points and/or tower attachment points on other bodies. For instance, the weighing scale system may comprise a counter on which the base unit is to rest may be adapted to provide an external attachment point for modular interface components or a tower attachment point for a tower.

By "circuitry", it is to be understood that this means the internal electrical workings of the base unit, including any which are directed to providing power and/or data to the display and/or controls. By "securely and that detachably receive", it is to be understood that the external attachment point is configured such that it can hold the item attached to it in place, but that the item can be detached from it without the use of specialised tools and without needing to open the casing of the base unit.

### Description of Drawings

Fig. 1 shows a weighing scale in an "all-in-base" configuration.
Fig. 2 shows a weighing scale in with a single modular interface component on the tower.
Fig. 3 shows a weighing scale with two modular interface components on the tower.
Fig. 4 shows an example of an external attachment point on a weighing scale base unit.
Fig. 5 shows an example of display and controls external attachment points at the top of a tower.
Fig. 6 depicts the underside of a weighing scale, showing one type of electrical connection point arrangement.

### Detailed Description

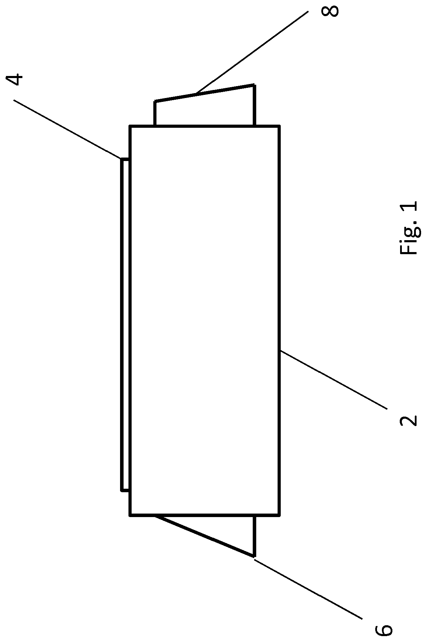

Fig. 1 depicts a weighing scale in a "all-in-base" configuration. It will be seen that the weighing scale comprises a base unit 2, a weighing surface 4, a first modular interface component 6 and a second modular interface component 8. In the present invention there can be any number of modular interface components from one to many, provided sufficient external attachment points are provided on the base unit (and/or tower, where a tower is provided), but two have been shown on the figure for clarity. Where more than one modular interface component is present there may be multiple different varieties of modular interface component present. For instance, the first modular interface component 6 could be a display whilst the second modular interface component 8 could be a set of controls. (Other suitable modular interface components include, but are not limited to, printers for receipts, touch screens, combined control and display components, and so on.) The base unit 2 comprises further essential parts of the weighing scale. Most modern scales used for commercial purposes comprise a load cell within the base unit 2. The load cell converts the force exerted on the weighing surface into an electrical signal and is therefore the means by which weighing calculations are accomplished. Although local regulations vary it is usually the case that scales used for commercial purposes are provided with tamper-proofing or tamper indicators as a deterrent against dishonest meddling with the load cell's calibration; such tamper proofing or tamper indication will usually be comprised in the base unit 2.

In addition, the base unit 2 in modern scales typically comprises circuitry. Digital displays require a source of power and a means of communication with the weighing scale via which instructions as to what to display can be sent; either or both of these may be provided by the base unit circuitry. Likewise, electrical signals from the controls must be received and relayed, and the controls may require a power supply, and the circuitry may perform either or both of these functions. The circuitry may comprise a motherboard. In the present invention the controls, the display, or both may be comprised on modular interface components. Consequently the modular interface components 6, 8 are in communication with the circuitry in the base unit 2 via an electrical interface (not shown in this figure).

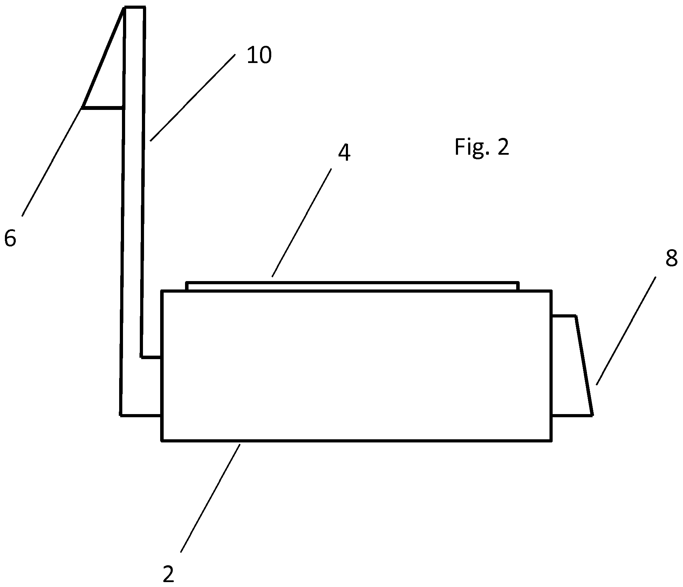

Fig. 2 depicts a weighing scale in a configuration where the first modular interface component is mounted on a tower 10 which is attached to the base unit 2. Second modular interface component 8 remains directly attached to the base unit 2. In such a configuration the modular interface components 6, 8 still need to be in communication with the circuitry comprised in the base unit 2. How this is to be accomplished will be discussed later.

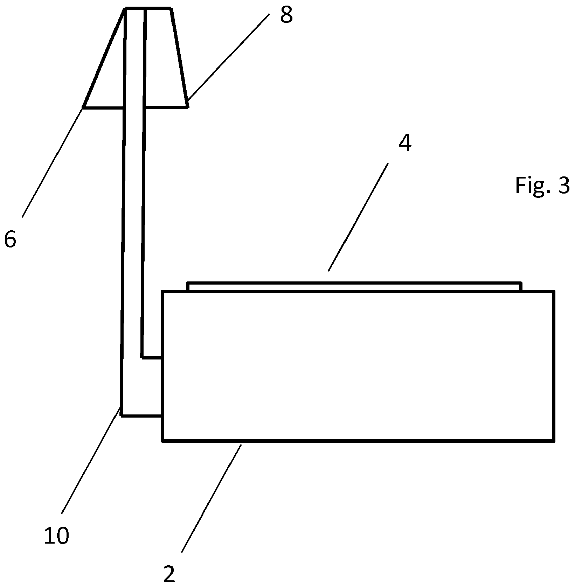

Fig. 3 depicts a weighing scale with both modular interface components 6, 8 comprised on the tower 10. Although they are depicted as being mounted at the same height here, it is not a requirement of the invention that this be the case in this configuration. As with the display-on-tower configuration, the modular interface components 6, 8 both still need to be in communication with the base unit 2. How this is to be accomplished will be discussed later.

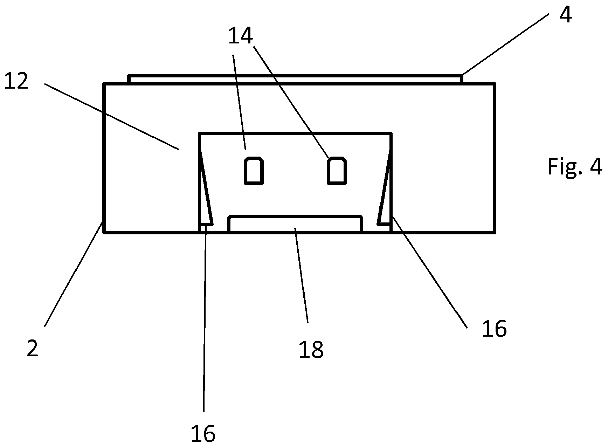

Fig. 4 depicts an example of a base unit 2 depicting one means by which an electrical connection between modular interface components 6, 8 and circuitry comprised in the base unit 2 may be accomplished. Visible in this elevation is an exterior attachment point 12. Exterior attachment points 12 on the base unit 2 are configured to accept modular interface components 6, 8. This may be accomplished by providing a generic design for both modular interface components 6, 8 and the exterior attachment points 12, such that any modular interface component 6, 8 can fit into any exterior attachment point 12. Alternately, an exterior attachment point 12 may be designed to accept only one type of modular interface component, so for instance in Figs. 1-3 it could be the case that there is a first type of exterior attachment point to accept the first modular interface component 6 and a second type of exterior attachment point to accept the second modular interface component 8. An exterior attachment point 12 may also be configured to accept the tower 10, in which case they will also act as tower attachment points. In Figs. 1-3 the modular interface components 6, 8 are securely and detachably received in a exterior attachment points (not shown in Figs. 1-3). In Figs. 2 and 3 the tower 10 is securely and detachably received in a tower attachment point.

The exterior attachment point 12 in Fig. 4 includes attachment features 16. These are defined as any features allowing the exterior attachment point 12 to securely and detachably receive a component that the exterior attachment point 12 is adapted to receive. By "securely", it is to be understood that the attachment features 16 cause the component to be held in place; by "detachably", it is to be understood that the component can be removed from the exterior attachment point 12 when desired by a user. Preferably, the detachment can be accomplished by hand without any special tools. However, in some variants of the invention the detachment may be accomplished with a simple tool or key. For instance, in some cases there may be provided a fixing such as a slider, lock, bolt or other means adapted to prevent removal of a component from the external attachment point 12. This may be necessary to prevent unauthorised persons from easily removing the interface components.

The attachment point 12 is "exterior" in the sense that it is found on the exterior casing of the base unit 2 and it is to be understood that the process of detaching a component from an exterior attachment point 12 can be accomplished without opening the exterior casing of the base unit 2; this is in contrast to prior art weighing scales in which the modular interface components 6, 8 may be directly wired to the motherboard and to remove them would require opening the base unit 2 in order to access the motherboard. Optionally, as well as securely and detachably receiving components, exterior attachment ports 12 may also securely and detachably receive covers in order to conceal the exterior attachment port 12 in an aesthetically pleasing manner.

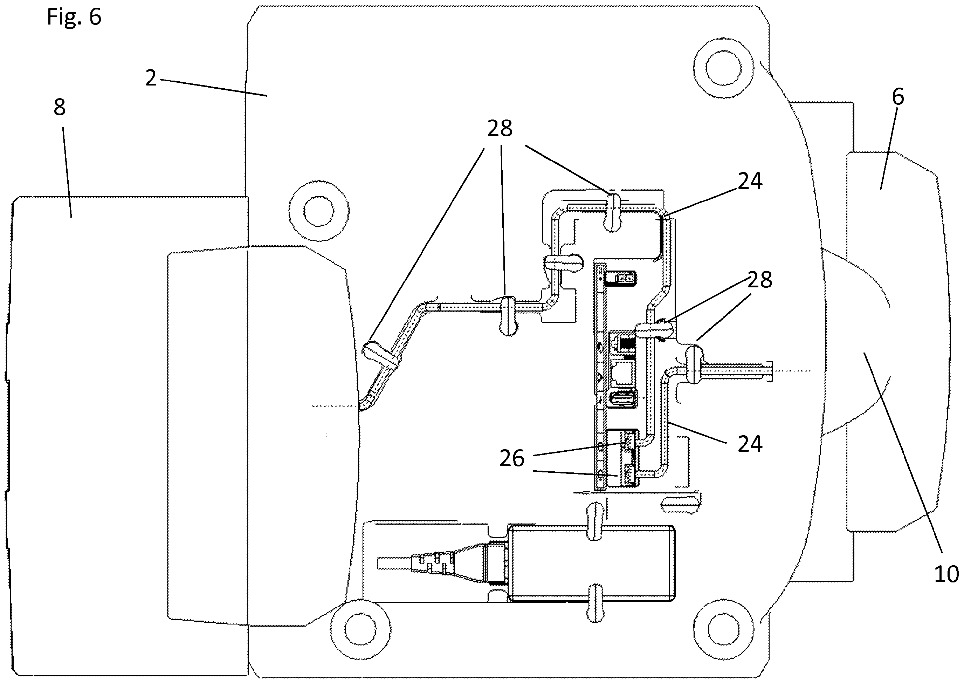

As mentioned, the modular interface components 6, 8 must be in communication with the circuitry inside the base unit 2 and means of providing this electrical connection without opening the base unit must be provided. In Fig. 4, the required electrical connection point is provided at the external attachment point 12 and comprises electrical contacts 14 which permit this communication by making an electrical connection with corresponding electrical contacts on the modular interface component 6, 8. An alternate method of establishing electrical communication without opening the base unit will be discussed below in connection with Figure 6. However, it is to be understood that any other means of establishing communication without opening the base unit 2 is acceptable.

The external attachment point 12 shown in Fig. 4 also has an optional feature of a tower storage port 18. When the scale is being converted from a configuration using the tower 10 to an all-in-base configuration, it is preferable to be able to store the tower 10 in a tower storage port 18 built into the base unit 2. This eliminates the need for additional storage to be found for the unwanted tower 10, and ensures that the tower 10 is easily accessible for conversion to a tower-based configuration. This also makes the weighing scale easier to transport, since base units 2 with the towers 10 stored in their tower storage ports 18 may be packed into a smaller volume than base units 2 with the towers 10 attached and standing erect, and the danger of the tower being damaged in transport is eliminated. (It is common for scales assembled in a tower configuration to be damaged in transport since it is very easy if the scales are dropped or knocked for the resultant force to damage or break the tower.) It is preferable that the entrance of the tower storage port 18 be behind an exterior attachment point 12 so that when the tower 10 is stored away the display 6 or controls 8 may be securely and detachably stowed in the exterior attachment port 12, thus ensuring that it cannot accidentally be removed from the tower storage port 18.

Naturally, the modular interface components 6, 8 are adapted to be securely and detachably received in the exterior attachment points 12. The tower is adapted to be securely and detachably received in a tower attachment point. Where the exterior attachment points 12 are also adapted to be tower attachment points, the tower 10 is adapted to be securely and detachably received in the exterior attachment points 12. For instance, components designed to interface with the exterior attachment point 12 of Fig. 4 will have features intended to interface with the attachment features 16 and electrical contacts intended to contact the electrical contacts 14.

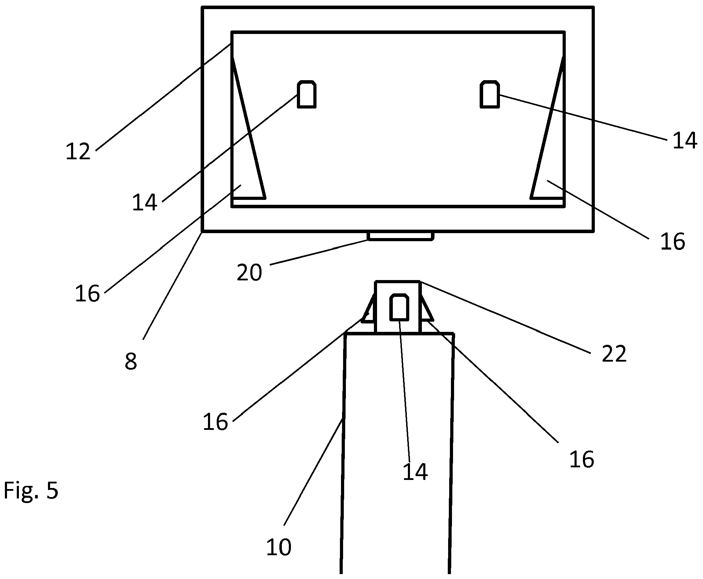

Components may be designed to interface with exterior attachment points 12 of varying designs. For instance, the modular interface components 6, 8 may be provided with second exterior attachment points (12, 22) on the tower 10, but these may vary from the exterior attachment points 12 provided on the base unit 2. Fig. 5 shows an example of this situation. The tower 10 has at the top a special exterior attachment point 22 which may plug into a receiving port 20 in the base of a modular interface component in a manner analogous to a plug and socket type arrangement - for the sake of this example, the component is the second modular interface component 8. In this example, the second modular interface component 8 comprises an exterior attachment point 12 adapted to accept the first modular interface component 6, because at the back of the second modular interface component 8 the attachment features 16 and electrical contacts 14, which are designed to interface with exterior attachment points 12 on the base unit 2, are also designed to provide an exterior attachment point 12 for the first modular interface component 6.

Fig. 6 depicts a bottom view of a base unit 2 in order to depict alternate means of providing an electrical connection between modular interface components 6, 8 and the circuitry within base unit 2 without opening the base unit. Here there is provided in the base unit 2 an electrical connection point 26. Wires 24 can extend from the electrical connection point 26 to the modular interface components 6, 8 when the modular interface components 6, 8 are installed in their external attachment points 12. Features may be provided to aid in the management of this wiring 24. For example, a depression or cavity in the base unit may be provided to store the wire 24. A course 28 provided by clips, spokes, attachment points or other means of guiding the wire 24 may be provided in order to take up the slack of the wire 24. Alternately, the wire 24 may be designed to retract either into the electrical connection point 26 or the modular interface components 6, 8 when disconnected from the other end and pulled out when it is necessary to connect the modular interface component 6, 8 to the electrical connection point 26. Although it is not directly depicted in Fig. 6, there may be at least one plug or other connector on the wire 24 which can be reversibly removed from the modular interface component 6, 8 or the electrical connection point 26. In the embodiment depicted in Fig. 6 there is a single electrical connection point 26 providing a point of electrical connection for wires 24 extending to both modular interface components 6, 8, but where multiple modular interface components 6, 8 are present there may be multiple electrical connection points 26 located on different parts of the base unit. Where present, the tower 10 may be hollowed out to allow the wire 24 to run up and down the tower without hanging loose on the exterior of the tower 10.

Additional configurations may be enabled simply by providing external attachment points and/or tower attachment points on other bodies. For instance, the weighing scale system may comprise a counter on which the base unit 2 is to rest may be adapted to provide an external attachment point for modular interface components 6, 8, or a tower attachment point for a tower 10. Where an electrical connection between modular interface components 6, 8 and the circuitry within the base unit 2 is established via a wire or wires 24 running between the modular interface component 6, 8 and an electrical connection point 26 (or multiple such points) on the base unit 2, the wire(s) 24 can simply extend across the counter, or may be concealed within runners or threaded through cavities provided on the counter. Where an electrical connection between modular interface components 6, 8 and the circuitry within the base unit 2 is established via electrical contacts 14 at external attachment points, circuitry could be provided within the counter in order to provide electrical contacts 14 at external attachment points on the counter and a base unit connection port on the counter adapted to interface with an electrical connection point 26 on the base unit in order to an establish an electrical connection from the circuitry within the base unit 2 to modular interface components 6, 8 received in external attachment points on the counter.

## Claims

1. A weighing scale system comprising:
a) a base unit (2) comprising circuitry; and
b) at least one modular interface component (6,8)
comprising one or more of the following features: a display, a touchscreen, a printer, an optical code reader;
wherein the system is configured as to be rapidly and easily transformed between different configurations and the scale further comprises:
i. at least two external attachment points (12, 22) adapted to securely and detachably receive the modular interface component, such that the same modular interface component may be received at at least two different positions on the base unit;
ii. at least one electrical connection point (14, 26) adapted to allow communication between the modular interface component and the circuitry,

2. A weighing scale system according to claim 1, further **characterised in that** at least one of the external attachment points (12, 22) is adapted to selectively receive a specific modular interface component (6, 8).

3. A weighing scale system according to any preceding claim, wherein the weighing scale further comprises a tower (10) and at least one of the external attachment points (12, 22) is comprised on the tower.

4. A weighing scale system according to claim 3, wherein a modular interface component (6, 8) received in an external attachment point (12, 22) on the tower (10) is adapted to provide an external attachment point (12, 22) for another modular interface component.

5. A weighing scale system according to claim 3 or 4, wherein the base unit (2) comprises a tower attachment point configured to securely and detachably receive the tower and/or a tower storage port (18) configured to store the tower.

6. A weighing scale system according to claim 5, wherein the tower attachment point is also an external attachment point (12, 22) for a modular interface component (6, 8).

7. A weighing scale system according to claim 6, wherein the tower storage port (18) is positioned behind an external attachment point (12, 22), such that when a modular interface component (6, 8) is attached to the scale at the external attachment point the entrance to the tower storage port is blocked.

8. A weighing scale system according to any preceding claim, wherein at least one external attachment point (12, 22) comprises an electrical connection point (14, 26) consisting essentially of electrical contacts (14) adapted to interface with electrical contacts provided on a modular interface component (6, 8).

9. A weighing scale system according to any preceding claim, wherein at least one electrical connection point (26) is provided at a point on the base unit (2) remote from the external attachment points (12, 22) and communication between a modular interface component (6, 8) and the circuitry is established via a wire (24) extending between the electrical connection point and the modular interface component.

10. A weighing scale system according to claim 9, wherein the wire (24) comprises a plug or connector which can be reversibly removed from the electrical connection point (26) or the modular interface component (6, 8).

11. A weighing scale system according to claim 10, wherein the wire (24) can be reversibly retracted into the modular interface component (6, 8) or the electrical connection point (26).

12. A weighing scale system according to any of claims 9-11, wherein the base unit (2) further comprises a course (28)for the taking up of slack in the wire (24).

13. A weighing scale system according to any preceding claim, wherein one or more of the external attachment points (12, 22) comprises fixings to prevent detachment from external attachment points.

14. A weighing scale system according to claim 17, wherein the fixing comprises one or more of the following: a screw, a lock, a bolt, a slider.

15. A weighing scale system according to any previous claim further comprising a counter comprising at least one external attachment point (12, 22) or tower attachment point.

## Patentansprüche

1. Waagesystem, das Folgendes umfasst:
a) eine Basiseinheit (2), umfassend Schaltungsanordnungen; und
b) zumindest eine modulare Schnittstellenkomponente (6, 8)
umfassend eines oder mehrere der folgenden Merkmale: eine Anzeige, einen Touchscreen, einen Drucker, einen Leser für optischen Code;
wobei das System dazu ausgelegt ist, schnell und einfach zwischen unterschiedlichen Auslegungen transformiert zu werden, und wobei die Waage ferner Folgendes umfasst:
i. mindestens zwei externe Befestigungspunkte (12, 22), dazu angepasst, die modulare Schnittstellenkomponente sicher und lösbar aufzunehmen, sodass die gleiche modulare Schnittstellenkomponente an mindestens zwei unterschiedlichen Positionen an der Basiseinheit aufgenommen werden kann;
ii. zumindest einen elektrischen Verbindungspunkt (14, 26), dazu angepasst, Kommunikation zwischen der modularen Schnittstellenkomponente und den Schaltungsanordnungen zu ermöglichen.

2. Waagesystem nach Anspruch 1, ferner **dadurch gekennzeichnet, dass** zumindest einer der externen Befestigungspunkte (12, 22) dazu angepasst ist, gezielt eine spezifische modulare Schnittstellenkomponente (6, 8) aufzunehmen.

3. Waagesystem nach einem der vorhergehenden Ansprüche, wobei die Waage ferner einen Turm (10) umfasst und zumindest einer der externen Befestigungspunkte (12, 22) am Turm enthalten ist.

4. Waagesystem nach Anspruch 3, wobei eine modulare Schnittstellenkomponente (6, 8), die in einem externen Befestigungspunkt (12, 22) am Turm (10) aufgenommen ist, dazu angepasst ist, einen externen Befestigungspunkt (12, 22) für eine andere modulare Schnittstellenkomponente bereitzustellen.

5. Waagesystem nach Anspruch 3 oder 4, wobei die Basiseinheit (2) einen Turmbefestigungspunkt umfasst, der dazu ausgelegt ist, den Turm und/oder eine Turmverstauöffnung (18), ausgelegt zum Verstauen des Turmes, sicher und lösbar aufzunehmen.

6. Waagesystem nach Anspruch 5, wobei der Turmbefestigungspunkt auch ein externer Befestigungspunkt (12, 22) für eine modulare Schnittstellenkomponente (6, 8) ist.

7. Waagesystem nach Anspruch 6, wobei die Turmverstauöffnung (18) hinter einem externen Befestigungspunkt (12, 22) positioniert ist, sodass, wenn eine modulare Schnittstellenkomponente (6, 8) am externen Befestigungspunkt an der Waage befestigt wird, der Zugang zur Turmverstauöffnung blockiert ist.

8. Waagesystem nach einem der vorhergehenden Ansprüche, wobei zumindest ein externer Befestigungspunkt (12, 22) einen elektrischen Verbindungspunkt (14, 26) umfasst, der im Wesentlichen aus elektrischen Kontakten (14) besteht, die dazu angepasst sind, mit elektrischen Kontakten verbunden zu werden, die an einer modularen Schnittstellenkomponente (6, 8) bereitgestellt sind.

9. Waagesystem nach einem der vorhergehenden Ansprüche, wobei zumindest ein elektrischer Verbindungspunkt (26) an einem Punkt an der Basiseinheit (2) bereitgestellt ist, der von den externen Befestigungspunkten (12, 22) abgesetzt ist, und wobei Kommunikation zwischen einer modularen Schnittstellenkomponente (6, 8) und den Schaltungsanordnungen über ein Kabel (24) errichtet wird, das sich zwischen dem elektrischen Verbindungspunkt und der modularen Schnittstellenkomponente erstreckt.

10. Waagesystem nach Anspruch 9, wobei das Kabel (24) einen Stecker oder Verbinder umfasst, der reversibel von dem elektrischen Verbindungspunkt (26) oder der modularen Schnittstellenkomponente (6, 8) entfernt werden kann.

11. Waagesystem nach Anspruch 10, wobei das Kabel (24) reversibel in die modulare Schnittstellenkomponente (6, 8) oder den elektrischen Verbindungspunkt (26) eingezogen werden kann.

12. Waagesystem nach einem der Ansprüche 9-11, wobei die Basiseinheit (2) einen Abschnitt (28) zum Aufnehmen von Durchhang im Kabel (24) umfasst.

13. Waagesystem nach einem der vorhergehenden Ansprüche, wobei einer oder mehrere der externen Befestigungspunkte (12, 22) Befestigungsmittel umfassen, um ein Lösen von den externen Befestigungspunkten zu verhindern.

14. Waagesystem nach Anspruch 17, wobei das Befestigungsmittel eines oder mehrere aus Folgendem umfasst: eine Schraube, einen Riegel, einen Bolzen, einen Schieber.

15. Waagesystem nach einem der vorhergehenden Ansprüche, ferner umfassend einen Ladentisch, umfassend zumindest einen externen Befestigungspunkt (12, 22) oder Turmbefestigungspunkt.

## Revendications

1. Système de balance de pesage, comprenant :
a) une unité de base (2) comprenant une circuiterie ; et
b) au moins un composant d'interface modulaire (6, 8), comprenant un ou plusieurs des dispositifs suivants : un affichage, un écran tactile, une imprimante, un lecteur de code optique ;
dans lequel le système est configuré afin d'être rapidement et facilement transformé entre des configurations différentes et la balance comprend en outre :
i. au moins deux points d'attache externes (12, 22) adaptés pour recevoir fermement et de façon détachable le composant d'interface modulaire, de telle sorte que ce composant d'interface modulaire puisse être reçu dans au moins deux positions différentes sur l'unité de base ;
ii. au moins un point de connexion électrique (14, 26) adapté pour permettre la communication entre le composant d'interface modulaire et la circuiterie.

2. Système de balance de pesage selon la revendication 1, **caractérisé en outre en ce qu'**au moins un des points d'attache externes (12, 22) est adapté pour recevoir sélectivement un composant d'interface modulaire spécifique (6, 8).

3. Système de balance de pesage selon une quelconque revendications précédente, dans lequel la balance de pesage comprend en outre une tour (10) et au moins un des points d'attache externes (12, 22) est compris sur la tour.

4. Système de balance de pesage selon la revendication 3, dans lequel un composant d'interface modulaire (6, 8) reçu dans un point d'attache externe (12, 22) sur la tour (10) est adapté pour fournir un point d'attache externe (12, 22) pour un autre composant d'interface modulaire.

5. Système de balance de pesage selon la revendication 3 ou 4, dans lequel l'unité de base (2) comprend un point d'attache de tour configuré pour recevoir fermement et de façon détachable la tour et/ou un orifice de retenue de tour (18) configuré pour retenir la tour.

6. Système de balance de pesage selon la revendication 5, dans lequel le point d'attache de tour est également un point d'attache externe (12, 22) pour un composant d'interface modulaire (6, 8).

7. Système de balance de pesage selon la revendication 6, dans lequel l'orifice de retenue de tour (18) est positionné derrière un point d'attache externe (12, 22), de telle sorte que, lorsqu'un composant d'interface modulaire (6, 8) est attaché à la balance au point d'attache externe, l'entrée de l'orifice de retenue de tour est bloquée.

8. Système de balance de pesage selon une quelconque revendications précédente, dans lequel au moins un point d'attache externe (12, 22) comprend un point de connexion électrique (14, 26) constitué essentiellement de contacts électriques (14) adaptés pour interfacer avec des contacts électriques prévus sur un composant d'interface modulaire (6, 8).

9. Système de balance de pesage selon une quelconque revendications précédente, dans lequel au moins un point de connexion électrique (26) est prévu à un point sur l'unité de base (2) éloigné des points d'attache externes (12, 22) et une communication entre un composant d'interface modulaire (6, 8) et la circuiterie est établie par l'intermédiaire d'un fil (24) s'étendant entre le point de connexion électrique et le composant d'interface modulaire.

10. Système de balance de pesage selon la revendication 9, dans lequel le fil (24) comprend une fiche ou un connecteur qui peut être réversiblement enlevé du point de connexion électrique (26) ou du composant d'interface modulaire (6, 8).

11. Système de balance de pesage selon la revendication 10, dans lequel le fil (24) peut être réversiblement rétracté dans le composant d'interface modulaire (6, 8) ou le point de connexion électrique (26).

12. Système de balance de pesage selon l'une quelconque des revendications 9 à 11, dans lequel l'unité de base (2) comprend en outre un chemin (28) pour le rattrapage de mou dans le fil (24).

13. Système de balance de pesage selon une quelconque revendications précédente, dans lequel un ou plusieurs des points d'attache externes (12, 22) comprend des fixations pour empêcher la séparation à partir de points d'attache externes.

14. Système de balance de pesage selon la revendication 17, dans lequel la fixation comprend un ou plusieurs de ce qui suit : une vis, un verrou, un boulon, un coulisseau.

15. Système de balance de pesage selon une quelconque revendication précédente, comprenant en outre un plan de travail comprenant au moins un point d'attache externe (12, 22) ou point d'attache de tour.
